(19) Europäisches Patentamt / European Patent Office / Office européen des brevets

(11) **EP 2 191 298 B1**

(12) **EUROPÄISCHE PATENTSCHRIFT**

(45) Veröffentlichungstag und Bekanntmachung des Hinweises auf die Patenterteilung:
**27.11.2013 Patentblatt 2013/48**

(21) Anmeldenummer: 08803727.0

(22) Anmeldetag: **05.09.2008**

(51) Int Cl.:
*G01S 17/10* (2006.01)  *G01S 7/497* (2006.01)
*G01S 17/89* (2006.01)  *G01S 7/486* (2006.01)

(86) Internationale Anmeldenummer:
**PCT/EP2008/061758**

(87) Internationale Veröffentlichungsnummer:
**WO 2009/043685 (09.04.2009 Gazette 2009/15)**

(54) **VERFAHREN ZUM BESTIMMEN EINES ABSTANDS MITTELS EINES OPTOELEKTRONISCHEN BILDSENSORS**

METHOD FOR DETERMINING A DISTANCE BY MEANS OF AN OPTOELECTRONIC IMAGE SENSOR

PROCÉDÉ PERMETTANT DE DÉTERMINER UNE DISTANCE AU MOYEN D'UN CAPTEUR D'IMAGE OPTOÉLECTRONIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007 DE 102007046562**

(43) Veröffentlichungstag der Anmeldung:
**02.06.2010 Patentblatt 2010/22**

(73) Patentinhaber: **Odos imaging Ltd**
**Edinburgh**
**EH9 3JF (GB)**

(72) Erfinder:
• **DOEMENS, Günter**
 **83607 Holzkirchen (DE)**
• **KÖNIG, Bernhard**
 **81669 München (DE)**
• **LISTL, Ludwig**
 **81739 München (DE)**
• **MENGEL, Peter**
 **82223 Eichenau (DE)**

(74) Vertreter: **Fischer, Ernst et al**
**Pateris**
**Patentanwälte Partnerschaft**
**Altheimer Eck 13**
**80331 München (DE)**

(56) Entgegenhaltungen:
**DE-A1- 10 153 742  DE-A1- 10 253 437**
**DE-A1- 19 757 595  DE-A1- 19 833 207**
**DE-A1- 19 947 023  DE-C1- 4 204 165**
**US-A- 4 896 606**

## Beschreibung

Die Erfindung bezieht sich auf ein Verfahren zum Bestimmen eines Abstands mittels eines optoelektronischen Bildsensors.

Entfernungsmessende Halbleiter-Bildsensoren auf der Basis von Lichtlaufzeitmessungen gewinnen in der Sicherheits- und Automobiltechnik zunehmend an Bedeutung. Solche 3D-Bildsensoren vereinigen im Prinzip eine Vielzahl von Lidar-Sensoren auf der Größe eines Mikrochips und stellen direkt eine Entfernungsinformation mit lateraler Auflösung zur Verfügung. Der Einsatz solcher 3D-Bildsensoren im Außenbereich hängt jedoch stark von diversen Umwelteinflüssen ab. Schwerwiegendster Nachteil ist dabei, wie bei allen optischen Sensoren, ihre Sichtabhängigkeit. Niederschläge, das heißt Regen, Schnee, Nebel, Rauch etc. oder eine verschmutzte Optik können die Effizienz solcher Systeme drastisch begrenzen. Die Ursachen liegen dabei in der Streuung und Abschwächung des Lichts an Wassertropfen oder Schwebeteilchen in der Atmosphäre auf dem Weg zur Detektion am optischen Bildsensor. Im Fall von beispielsweise Niederschlägen können entsprechend aus den gewonnenen Sensordaten keine zuverlässigen Tiefenwerte mehr über Objekte im Vorfeld vor einem solchen Bildsensor abgeleitet werden.

Grundsätzlich lassen sich bei 3D-Bildsensoren zwei ToF-Messprinzipien (ToF: Time-of-Flight, deutsch: Laufzeit) unterscheiden in Form von so genannten CW-phasenmodulierten ToF-Verfahren (CW: Continuous Wave/kontinuierliche Welle), wie sie z. B. als PMD-Technologie (PMD: Photonic Mixing Device) oder Canesta bekannt sind, und von laserpulsbasierten ToF-Verfahren.

Ein laserpulsbasiertes ToF-Verfahren ist aus ist aus EP 1 040 366 B1 bekannt. Wie anhand Fig. 4 veranschaulicht, dient das Verfahren zum Bestimmen eines Abstands d zu einem Objekt mittels eines optoelektronischen Bildsensors mit zumindest einem Bildpunkt und einem dem Bildpunkt zugeordneten einstellbaren Integrator. Dargestellt sind verschiedene in dem System verwendete Signale etc. über der Zeit t.

Das hinsichtlich des Abstands d zu erfassende Objekt wird durch Aussenden von Lichtimpulsen 1 mit vorgegebener Beleuchtungs-Zeitdauer Tp und einer vorgegebenen Laserleistung P beleuchtet. Von dem Objekt zurückreflektierte Lichtimpulse 2 werden an dem zumindest einen Bildpunkt über eine vorgegebene Integrationszeit T1 kleiner oder gleich der Beleuchtungs-Zeitdauer Tp erfasst, sofern sie innerhalb dieses Zeitfensters beim Bildpunkt eintreffen. Dabei liegt ein Zeitpunkt T1xs für den Beginn der ersten Integrationszeit T1 vor dem Eintreffen des zurückreflektierten Lichtimpulses 2, der von einem nächst liegenden zu erfassenden Objektpunkt des Objekts reflektiert wurde. Eine weitere Integrationszeit T2 dauert über ein Vielfaches der Beleuchtungs-Zeitdauer Tp an und beginnt zu einem Zeitpunkt T2xs gleich dem Zeitpunkt T1xs des Beginns der ersten Integrationszeit T1. Aus den entsprechend unterschiedlichen Integrationszeiten T1, T2 resultierenden unterschiedliche aufgenommene Integrationswerte U1x bzw. U2x, welche durch die Integration bzw. eine entsprechende Speicherung in Kondensatoren aus erfassten Amplituden des Photostroms I1 bzw. I2 bzw. Ausgangsspannungen der zurückreflektierten Lichtimpulse 2 ermittelt werden. Aus den unterschiedlichen Integrationswerten U1x, U2x lässt sich ein Abstandswert ermitteln, welcher dem Abstand d entspricht.

Bei dieser Verfahrensweise liegt der Zeitpunkt T1xs, T2xs des Beginns der Integrationszeiten T1, T2 gleichzeitig mit einem Zeitpunkt T0 des Beginns des Aussendens des Lichtimpulses 1.

Da bei der beschriebenen vorrichtungsgemäßen Umsetzung durch einen CMOS-Halbleiterchip eine Verzögerung zwischen einem Triggersignal bis zum Aktivieren der Empfängeranordnung und dieser nachgeschalteten Komponenten berücksichtigt werden muss, wird außerdem eine für die Abstandsbestimmung nicht relevante Triggerpunkt-Zeitverzögerung mit einer festen Verzögerungsdauer durch das Verzögern des Aussendens der Lichtimpulse 1 implementiert.

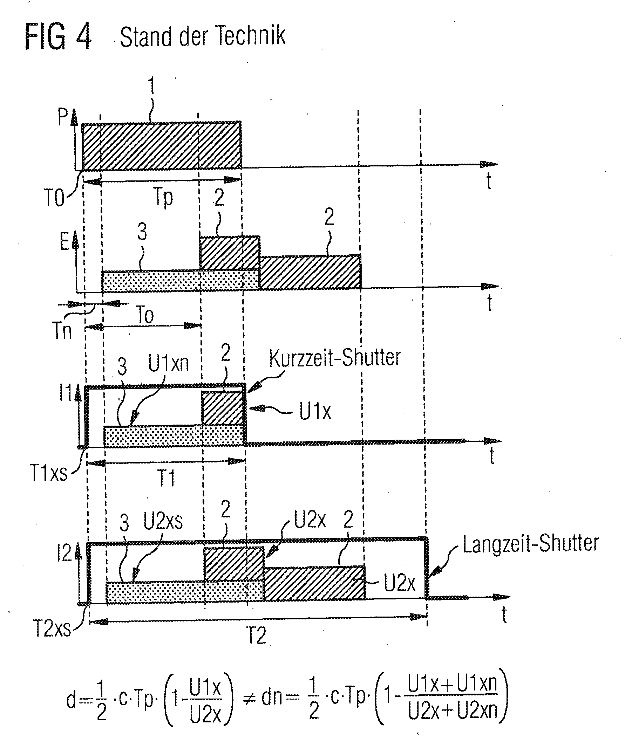

Über ebenfalls der Zeit t aufgetragen ist in Fig. 4 die reflektierte Energie bzw. Bestrahlungsstärke E an der Sensoroberfläche des Bildpunkts des optoelektronischen Bildsensors aufgetragen. Nach einer Niederschlags-Reflexions-Zeitdauer Tn, welcher einer Laufzeit des ausgesandten Lichtimpulses 1 bis zu einem Raum mit Niederschlag und zurück entspricht, wird bereits ein vom Niederschlag reflektierter Lichtimpuls 3 erfasst. Die Dauer dieses vom Niederschlag reflektierten Lichtimpulses 3 entspricht mindestens der Dauer des gesendeten Lichtimpulses 1. Da mit zunehmendem Abstand von der Lichtquelle der Einfluss der Niederschlagstropfen geringer wird, nimmt auch die Intensität bzw. Bestrahlungsstärke des vom Niederschlag reflektierten Lichtimpulses 3 mit der Zeit ab, was jedoch aus Gründen der Vereinfachung zur Erläuterung des Grundprinzips vorliegend zeichnerisch nicht berücksichtigt ist. Dadurch wird über eine weitere Zeitdauer, welche der Zeitdauer vom Aussenden des gesendeten Lichtimpulses 1 bis zum Empfang eines von einem Objekt zurückreflektierten Lichtimpulses 2 entspricht, eine Energie gemessen, welche durch den Niederschlag auf einem ersten Teil der Wegstrecke bis zum Objekt erzeugt wird.

Sofern, wie beispielhaft dargestellt, das Objekt so nah an der Lichtquelle liegt, dass eine Objekt-Lichtlaufzeit To zum Objekt und zurück kürzer als die Sendedauer bzw. Beleuchtungs-Zeitdauer Tp des ausgesendeten Lichtimpulses 1 ist, findet eine Überlagerung der Energieanteile bzw. Bestrahlungsstärke des vom Niederschlag reflektierten Lichtimpulses 3 und des vom Objekt zurückreflektierten Lichtimpulses 2 statt.

Wird nun, wie im dritten Diagramm aus Fig. 4 skizziert, ein Kurzzeit-Shutter bzw. die erste Integrationszeit T1 mit der Dauer kleiner oder gleich der Beleuchtungs-Zeitdauer Tp über die Ausgangsspannungen und, wie in der dem vierten Diagramm in Fig. 4 skizziert, ein Langzeit-Shutter mit der weiteren Integrationszeit T2 mit einem Vielfachen der Beleuchtungs-Zeitdauer Tp über die entsprechende Ausgangsspannung des Langzeit-Shutters gelegt, so werden durch beide Integrationszeiten T1, T2 sowohl zumindest Ausgangsspannungsanteile, welche durch den Niederschlag verursacht wurden, als auch Ausgangsspannungsanteile, welche durch das reflektierende Objekt verursacht wurden, erfasst. Dabei wird jedoch gemäß dem Messprinzip von dem Kurzzeit-Shutter, das heißt in der ersten Integrationszeit T1 nur geringe Anteile des Photostroms erfasst, welcher durch den vom Objekt reflektierten Lichtimpuls erzeugt wurde. Dies resultiert in voneinander abweichenden Abstandsbestimmungen für eine Messung bei Niederschlag und eine Messung ohne Niederschlag, wie den nachfolgenden Formeln entnehmbar ist.

Ohne Niederschlag wird mit c als der Lichtgeschwindigkeit, der Beleuchtungs-Zeitdauer Tp und den Integrationswerten U1x, U2x ein Abstand d erhalten gemäß

$$d = \frac{1}{2} \cdot c \cdot Tp \cdot \left(1 - \frac{U1x}{U2x}\right). \qquad (1)$$

Bei Niederschlag wird hingegen ein Niederschlags-Abstand dn erhalten gemäß

$$dn = \frac{1}{2} \cdot c \cdot Tp \cdot \left(1 - \frac{U1x + U1xn}{U2x + U2xn}\right). \qquad (2)$$

Ersichtlich ist, dass der Abstand d ohne Niederschlag und der Niederschlagsabstand dn bei Niederschlag voneinander abweichen, d. h. d ≠ dn. Die durch den Niederschlag zusätzlich auftretenden Anteile im reflektierten Laserimpuls führen bei entsprechend starkem Niederschlag somit zu Fehlmessungen bei der Bestimmung des wahren Objektabstands beim Einsatz eines Kurzzeit-Shutters und eines Langzeit-Shutters bzw. zweier entsprechend gewählter Integrationszeitdauern.

Optische Systeme sind somit prinzipbedingt bei schlechten Sichtverhältnissen nur begrenzt einsetzbar.

Die Aufgabe der Erfindung besteht darin, ein Verfahren zum Bestimmen eines Abstands mittels eines optoelektronischen Bildsensors derart zu verbessern, dass eine Einsetzbarkeit auch bei Niederschlägen ermöglicht wird.

DE 198 33 207 A1 offenbart ein Verfahren und eine Vorrichtung zur Erzeugung dreidimensionaler Abstandsbildet von räumlichen Objekten, wobei eine Kurzzeitbelichtung, beispielsweise durch Laserdioden des Objektes durchgeführt wird.

DE 197 57 595 A1 beschreibt Aspekte einer Vorrichtung und eines Verfahrens gemäß vorstehend genannter EP 1 040 366 B1. Allgemein bekannt sind aus DE 101 53 742 A1 ein Verfahren und eine Vorrichtung zur Aufnahme von dreidimensionalen Abstandsbildern zu einer Objektoberfläche durch Lichtlaufzeitmessungen mit einem Photodetektor mit Kurzzeitintegration. Dabei werden zwei zeitverzögerte und zeitlich nacheinander folgende Integrationsfenster eingesetzt.

Iu US 4,896,606 ist ein optischer Abstandszünder beschrieben, der das Projektil im gewünschten Abstand vor dem Ziel zur Detonation bringen soll, wobei der Abstandszünder sehr empfindlich auf Störeinflüsse ist, beispielsweise auf Regentropfen, welche ein Ziel vortäuschen, das gar nicht vorhanden ist.

In DE 102 53 437 A1 ist ein Verfahren zum Erfassen einer dreidimensionalen Topografie offenbart, bei dem ein elektromagnetischer Sendepuls in Richtung der Topografie emittiert wird und der von der Topographie zurückreflektierte Sendepuls in einem einzigen Integrationsintervall gemessen wird.

Die Aufgabe wird mit den Merkmalen des Patentanspruchs 1 gelöst. Bevorzugte Ausgestaltungen dazu sind in den abhängigen Patentansprüchen angegeben.

Diese Aufgabe wird besonders gelöst durch ein Verfahren zum Bestimmen eines Abstands mittels eines optoelektronischen Bildsensors mit den Merkmalen gemäß Patentanspruch 1 bzw. durch eine Vorrichtung zum Bestimmen eines Abstands mittels eines optoelektronischen Bildsensors mit den Merkmalen gemäß Patentanspruch 12. Eigenständig vorteilhaft sind ein Verfahren zum Erfassen von Niederschlag mittels eines optoelektronischen Bildsensors mit den Merkmalen gemäß Patentanspruch 8 bzw. durch eine Vorrichtung zum Erfassen von Niederschlag mittels eines optoelektronischen Bildsensors mit den Merkmalen gemäß Patentanspruch 15.

Einheitlichkeit besteht dabei dadurch, dass beide Verfahren bzw. Vorrichtungen auf dieselbe Erkenntnis zurück greifen und einerseits einen ersten zeitlichen Abschnitt empfangener Daten gezielt zur Bestimmung von Niederschlag verwenden und andererseits gerade diesen zeitlichen Abschnitt dieser empfangenen Daten ausblenden. Letztendlich wird bei dem Verfahren zur Abstandsbestimmung von der Erkenntnis ausgegangen, dass gemäß dem anderen genannten Verfahren Niederschlag bestimmbar ist. Besonders vorteilhaft ist entsprechend auch der kombinierte Einsatz beider Verfahren in einer Vorrichtung zum Bestimmen sowohl eines Abstands zu einem Objekt als auch eines eventuell fallenden Niederschlags.

Vorteilhafte Ausgestaltungen sind Gegenstand abhängiger Ansprüche.

Bevorzugt wird demgemäß ein Verfahren zum Bestimmen eines Abstands zu einem Objekt mittels eines optoelektronischen Bildsensors mit zumindest einem Bildpunkt und einem dem Bildpunkt zugeordneten einstellbaren Integrator, bei dem das Objekt durch Aussenden mindestens eines Lichtimpulses vorgegebener Beleuchtungs-Zeitdauer beleuchtet wird, innerhalb zumindest einer vorgegebenen Integrationszeit von dem Objekt zurückreflektierte Lichtimpulse an dem zumindest einen Bildpunkt über eine Erfassungszeitdauer insbesondere kleiner oder gleich der Beleuchtungs-Zeitdauer erfasst werden, wobei ein Zeitpunkt für den Beginn der zumindest einen Integrationszeit vor dem Eintreffen des zurückreflektierten Lichtimpulses liegt, der von einem nächst liegenden zu erfassenden Objektpunkt des Objekts reflektiert wurde, und aus den entsprechend ihrer unterschiedlichen Lichtlaufzeiten resultierenden unterschiedlichen aufgenommenen Intensitäten und somit Integrationswerten der zurückreflektierten Lichtimpulse Abstandswerte zum Bestimmen des Abstands ermittelt werden, wobei der Zeitpunkt des Beginns der Integrationszeit auf einen zeitversetzten Zeitpunkt, insbesondere einstellbar zeitversetzten Zeitpunkt, hinter den Beginn des Aussendens eines solchen Lichtimpulses gelegt wird.

Bevorzugt werden bei dem Verfahren jeweils zumindest zwei vorgegebene Integrationszeiten zum Bestimmen des Abstandes verwendet, wobei diese vorgegebenen Integrationszeiten zum selben zeitversetzten Zeitpunkt hinter dem Beginn des Aussendens eines solchen Lichtimpulses beginnen, wobei die erste der Integrationszeiten auf die Dauer kleiner oder gleich der Beleuchtungs-Zeitdauer festgelegt wird und die zweite der Integrationszeiten auf eine Dauer länger als die Beleuchtungs-Zeitdauer festgelegt wird. Die zweite der Integrationszeiten wird bevorzugt auf eine Dauer länger als ein Vielfaches der Beleuchtungs-Zeitdauer festgelegt wird.

Alternativ dazu werden bei dem Verfahren jeweils zumindest zwei solche vorgegebene Integrationszeiten zum Bestimmen des Abstandes verwendet, wobei diese vorgegebenen Integrationszeiten zu zeitlich zueinander versetzten zeitversetzten Zeitpunkten hinter den Beginn des Aussendens eines solchen Lichtimpulses beginnen. Diese zumindest zwei Integrationszeiten werden bevorzugt auf die Dauer kleiner oder gleich der Beleuchtungs-Zeitdauer festgelegt.

Der zeitversetzte Zeitpunkt wird vorzugsweise um mindestens eine Dauer der Beleuchtungs-Zeitdauer hinter den Zeitpunkt des Beginns des Aussendens eines solchen Lichtimpulses gelegt. Der zeitversetzte Zeitpunkt wird insbesondere zusätzlich mindestens um eine Korrektur-Zeitdauer entsprechend einer Niederschlags-Reflexions-Zeitdauer von einer Lichtquelle des Lichtimpulses zu einem Raum mit möglichem Niederschlag und zurück zum Bildpunkt hinter den Beginn des Aussendens eines solchen Lichtimpulses gelegt.

Eigenständig bevorzugt wird ein Verfahren zum Erfassen von Niederschlag mittels eines optoelektronischen Bildsensors mit zumindest einem Bildpunkt und einem dem Bildpunkt zugeordneten einstellbaren Integrator, bei dem ein eventuell vorhandenes Objekt durch Aussenden mindestens eines Lichtimpulses vorgegebener Beleuchtungs-Zeitdauer beleuchtet wird, im Fall von Niederschlag innerhalb zumindest einer vorgegebenen Integrationszeit zumindest ein von dem Niederschlag zurückreflektierter Lichtimpuls an dem zumindest einen Bildpunkt insbesondere kleiner oder gleich der Beleuchtungs-Zeitdauer erfasst wird, wobei ein Zeitpunkt für den Beginn der Integrationszeit vor dem Eintreffen des zurückreflektierten Lichtimpulses liegt, der von dem Niederschlag reflektiert wurde, und aus der zumindest einen aufgenommenen Intensität des zurückreflektierten Lichtimpulses direkt auf das Vorhandensein von Niederschlag geschlossen wird.

Die Dauer der zumindest einen Integrationszeit wird dabei vorzugsweise auf eine Dauer einer Zweiwege-Lichtlaufzeit festgelegt, innerhalb welcher der Lichtimpuls einen Raum durchquert, in welchem der Niederschlag auftreten kann und in welchem sich kein Objekt befinden kann. Ein solcher Raum wird z.B. beim Einbau einer Lichtquelle und des Bildsensors hinter einer Fahrzeugscheibe von der Scheibe bis zum vorderen Ende des Fahrzeugs oberhalb einer Motorhaube gebildet.

Besonders bevorzugt wird ein Verfahren zum Erfassen von Niederschlag durch Bestimmen eines Abstands zu einem Objekt, wobei das Objekt durch Aussenden mindestens eines Lichtimpulses vorgegebener Beleuchtungs-Zeitdauer beleuchtet wird, mittels innerhalb vorgegebener Integrationszeiten von dem Objekt zurückreflektierte Lichtimpulse ein Abstand mit einem derartigen Verfahren zur Abstandsbestimmung mit versetztem Beginn der Integrationsfenster ermittelt wird, weitere Integrationszeiten auf einen Zeitpunkt vor den zeitversetzten Zeitpunkt zur Bestimmung eines bezüglich Niederschlags nicht oder nicht vollständig korrigierten zweiten Abstands gelegt werden und im Fall einer Differenz zwischen dem ersten Abstand und dem zweiten Abstand ungleich Null oder betragsmäßig größer einem Differenzschwellwert auf ein Vorhandensein von Niederschlag geschlossen wird. Bevorzugt wird, wenn der Zeitpunkt für den Beginn der weiteren Integrationszeiten gleich einem Zeitpunkt des Beginns des Aussendens des Lichtimpulses gesetzt wird.

Ein Beginn der Integrationszeit wird allgemein bevorzugt verzögert um eine Korrektur-Zeitdauer einer Lichtlaufzeit von einer Lichtquelle des Lichtimpulses bis vor einen ersten Bereich mit möglichem Niederschlag und zum Bildpunkt zurück hinter den Beginn des Aussendens eines solchen Lichtimpulses gelegt. Ein solcher Raum wird z.B.

beim Einbau einer Lichtquelle und des Bildsensors hinter einer Fahrzeugscheibe von der Lichtquelle zur Scheibe und zurück zum Bildsensor gebildet.

Die Korrektur-Zeitdauer wird bevorzugt automatisiert bestimmt als eine Niederschlags-Reflexions-Zeitdauer bis zum Eintreffen eines ersten zurückreflektierten Lichtimpulses mit einer aufgenommenen Intensitäten in einem vorgegebenen Intensitätsbereich kleiner einem Niederschlags-Intensitätsschwellwert und/oder kleiner einer Intensität zu einem späteren Zeitpunkt hinter den Beginn des Aussendens eines solchen Lichtimpulses, insbesondere zu einem späteren Zeitpunkt größer der Dauer der Beleuchtungs-Zeitdauer hinter den Beginn des Aussendens eines solchen Lichtimpulses. Eine solche Verfahrensweise ermöglicht eine erste Justierung nach dem Einbau einer solchen Vorrichtung.

Eigenständig bevorzugt wird entsprechend auch eine Vorrichtung zum Bestimmen eines Abstands zu einem Objekt mit zumindest einer Lichtquelle zum Aussenden mindestens eines Lichtimpulses vorgegebener Beleuchtungs-Zeitdauer zum Beleuchten des Objekts, mit zumindest einem optoelektronischen Bildsensor, der zumindest einen Bildpunkt und mit einen dem Bildpunkt zugeordneten einstellbaren Shutter und/oder einstellbaren Integrator aufweist, mit einer Kontrolleinheit und/oder einer Auswerteeinheit zum Berechnen des Abstands, die ausgelegt und/oder programmiert ist, innerhalb zumindest einer vorgegebenen Integrationszeit von dem Objekt zurückreflektierte Lichtimpulse an dem zumindest einen Bildpunkt kleiner oder gleich der Beleuchtungs-Zeitdauer zu erfassen, wobei ein Zeitpunkt für den Beginn der Integrationszeit vor dem Eintreffen des zurückreflektierten Lichtimpulses liegt, der von einem nächst liegenden zu erfassenden Objektpunkt des Objekts reflektiert wurde, und aus den entsprechend ihrer unterschiedlichen Lichtlaufzeiten resultierenden unterschiedlichen aufgenommenen Intensitäten der zurückreflektierten Lichtimpulse Abstandswerte zum Bestimmen des Abstands zu ermitteln, und mit einer Triggereinrichtung zum Triggern des Zeitpunkts des Aussendens des Lichtimpulses und/oder des Beginns der Integrationszeit, die Triggereinrichtung und/oder die Kontrolleinheit und/oder die Recheneinrichtung zum Berechnen des Abstands ausgelegt oder programmiert ist, den Beginn der Integrationszeit auf einen zeitversetzten Zeitpunkt, insbesondere einstellbar zeitversetzten Zeitpunkt hinter den Beginn des Aussendens eines solchen Lichtimpulses zu legen.

Eigenständig bevorzugt wird entsprechend auch eine Vorrichtung zum Erfassen von Niederschlag mit zumindest einer Lichtquelle zum Aussenden mindestens eines Lichtimpulses vorgegebener Beleuchtungs-Zeitdauer, zumindest einem optoelektroni-' schen Bildsensor, der zumindest einen Bildpunkt und einen dem Bildpunkt zugeordneten einstellbaren Shutter und/oder einstellbaren Integrator zum Erfassen von Niederschlag mittels zumindest einem Integrationswert des einstellbaren Integrators aufweist, und einer Kontrolleinheit und/oder einer Auswerteeinheit, die ausgelegt und/oder programmiert ist, im Fall von Niederschlag innerhalb zumindest einer vorgegebenen Integrationszeit zumindest einen von dem Niederschlag zurückreflierter Lichtimpuls an dem zumindest einen Bildpunkt kleiner oder gleich der Beleuchtungs-Zeitdauer zu erfassen, wobei ein Zeitpunkt für den Beginn der Integrationszeit vor dem Eintreffen eines von einem eventuellen Objekt zurückreflektierten Lichtimpulses so liegt, dass ein von dem Niederschlag zurückreflektierter Lichtimpulse erfasst wird, und aus der zumindest einen aufgenommenen Intensität des zurückreflektierten Lichtimpulses direkt auf das Vorhandensein von Niederschlag zu schließen oder aus der zumindest einen aufgenommenen Intensität des zurückreflektierten Lichtimpulses auf eine Laufzeit und über die Laufzeit auf das Vorhandensein von Niederschlag zu schließen.

Der einstellbare Integrator ist bevorzugt durch einen elektronischen Kurzzeit-Integrator ausgebildet. Bevorzugt ist eine derartige Vorrichtung mit einem Verzögerungsglied zum Verzögern des Beginns der Integrationszeit relativ zu dem Aussenden eines solchen Lichtimpulses ausgestattet. Der Bildsensor ist bevorzugt durch einen Halbleiter-Sensor ausgebildet ist.

Die Beleuchtungs-Zeitdauer des zumindest einen Lichtimpulses liegt bevorzugt im Bereich kleiner einer Millisekunde, insbesondere im Nano- und Mikrosekundenbereich, insbesondere im Bereich zwischen 10 und 100 ns.

Durch die vorgeschlagene Verfahrensweise bzw. Vorrichtung wird der Einfluss von Niederschlag auf einen Bildsensor, insbesondere auf einen 3D-Bildsensor vollständig oder zumindest in hohem Maße reduziert. Somit sind optische Sensoren auch in sicherheitsrelevanten Bereichen, wie in Kraftfahrzeugen zu Zwecken des Kollisionsschutzes oder einer Fußgängererkennung, einsetzbar, da ein derart aufgebauter bzw. gesteuerter Bildsensor eine weitgehende Unabhängigkeit von Umwelteinflüssen ermöglicht.

Ausgegangen wird bei den Überlegungen eines solchen Verfahrens bzw. einer solchen Vorrichtung davon, dass Niederschlag im Nahbereich des Bildsensors wesentlich stärker zu einer Bildstörung beiträgt, als Niederschlag, der in größerem Abstand zum Bildsensor auftritt. Der Grund für diese Abstandsabhängigkeit liegt in der mittleren Größe eines Wassertropfens im Vergleich zur objektseitigen Fläche eines Bildelementes, welche bedingt durch den Öffnungswinkel einer üblicherweise verwendeten abbildenden Optik quadratisch mit dem Abstand zum Bildsensor ansteigt. Daraus folgt, dass der störende Anteil der Lichtstreuung durch Niederschlag im Verhältnis zum nutzbaren Bildsignal des Objektes quadratisch mit zunehmendem Abstand zum Bildsensor abnimmt.

Beschrieben wird entsprechend ein Verfahren und eine Vorrichtung, welche es für insbesondere 3D-Halbleiter-Sensoren erlaubt, den Nahbereich des Bildsensors bei der Erfassung von Abstandsbildern auszuschließen und dadurch eine Sichtbeeinträchtigung bei Niederschlägen weitgehend zu unterdrücken. Ermöglicht wird dies insbesondere durch eine Signalerfassung und entsprechende Entfernungsberechnung in zeitlich zum ausgesendeten Lichtimpuls, insbesondere Laser-Lichtimpuls, verzögerten Integrationsfenstern des Halbleitersensors durchgeführt.

Vorteilhaft ermöglicht ein solches Verfahren durch eine gezielte Betrachtung des Nahbereichs das Auftreten von Niederschlägen zu erkennen und damit den 3D-Bildsensor gleichzeitig als Regendetektor einzusetzen.

Ein Ausführungsbeispiel wird nachfolgend anhand der Zeichnung näher erläutert. Dabei werden für gleiche oder gleichartige Funktionen und Komponenten in verschiedenen Ausführungsbeispielen gleiche Bezugszeichen, gegebenenfalls gekennzeichnet durch einen "°" oder "*" verwendet. Soweit keine Modifikationen beschrieben sind, wird insbesondere auch auf die Ausführungen der jeweils weiteren Ausführungsbeispiele verwiesen. Insbesondere wird die Offenbarung der EP 1 040 366 B1 vollumfänglich zur Beschreibung der grundlegenden Verfahrensweisen und Ausgestaltungen von Vorrichtungen einbezogen. Es zeigen:

Fig. 1 beispielhaft Komponenten einer bevorzugten Anordnung zum Bestimmen eines Abstands mittels eines optoelektronischen Bildsensors sowie über der Zeit aufgenommene Diagramme verschiedener Verfahrens- bzw. Signalverläufe in einer solchen Vorrichtung,

Fig. 2 zu einer alternativen Ausführungsform entsprechende Ablaufdiagramme,

Fig. 3 Verfahrensablaufdiagramme über die Zeit für ein Verfahren zum Bestimmen von Niederschlag im Vorfeld eines optoelektrischen Bildsensors und

Fig. 4 Ablaufdiagramme zur Veranschaulichung des Standes der Technik.

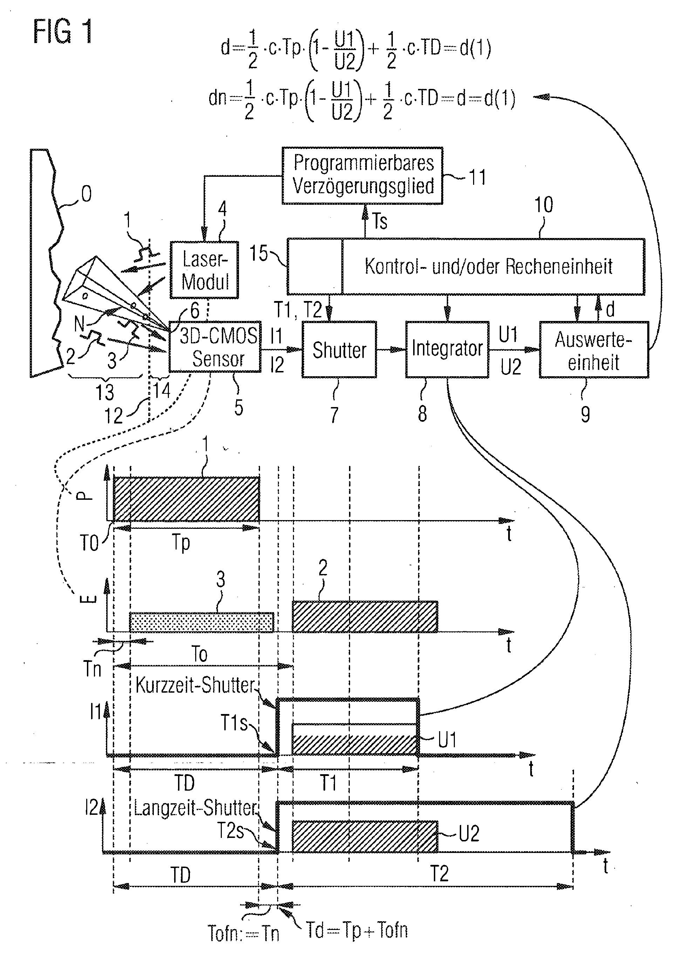

Fig. 1 zeigt beispielhaft Komponenten einer Vorrichtung zum Bestimmen eines Abstands d zu einem Objekt O. Zum Aussenden eines Lichtimpulses 1 dienen eine oder mehrere Lichtquellen 4. Der Lichtimpuls 1 wird in Richtung des Vorfeldes vor der Vorrichtung ausgesendet und wird im Falle eines im Vorfeld befindlichen Objektes O an diesem reflektiert. Derart zurückreflektierte Lichtimpulse 2 werden mittels eines optoelektronischen Bildsensors 5 erfasst. Zum Erfassen solcher zurückreflektierter Lichtimpulse 2 weist der optoelektronische Bildsensor 5 zumindest einen Bildpunkt 6, vorzugsweise eine Vielzahl von Bildpunkten 6 auf. Zusätzlich zu zurückreflektierten Lichtimpulsen 2 werden von dem zumindest einen Bildpunkt 6 bei vorliegendem Niederschlag N zusätzlich auch vom Niederschlag N zurückreflektierte Lichtimpulse 3 erfasst. Bevorzugt ist der optoelektronische Bildsensor 5 ein Halbleiter-Bildsensor, insbesondere ein 3D-CMOS-Sensor.

Im unteren Teil von Fig. 1 sind zeitliche Ablaufdiagramme gezeigt. Die erste Zeile zeigt dabei eine Lichtleistung bzw. Laserleistung P des ausgesendeten Lichtimpulses 1, wie er von der Lichtquelle 4 in vorderseitiger Richtung ausgesendet wird. Beispielhaft wird für die nachfolgenden Betrachtungen davon ausgegangen, dass ein Zeitpunkt T0 des Beginns des Aussendens des Lichtimpulses 1 zugleich der Beginn der laufenden Zeit t in den dargestellten Diagrammen ist.

Durch den Bildsensor 5 werden bei vorliegendem Niederschlag N und einem solchen im Vorfeld befindlichen Objekt O verschiedene Signale empfangen. Nach einer ersten Niederschlags-Reflexions-Zeitdauer Tn wird Energie von dem Bildpunkt 6 empfangen. Dabei und in dem nachfolgenden Zeitraum handelt es sich um den zurückreflektierten Lichtimpuls 3, welcher von dem Niederschlag N zurückreflektiert wird, der sich im Bereich vor der Lichtquelle 4 und dem Bildsensor 5 befindet. Zur Vereinfachung der Veranschaulichung des Grundprinzips wird angenommen, dass die Empfangsdauer des zurückreflektierten Lichtimpulses 3 etwa gleichlang wie die Sendedauer des ausgesendeten Lichtimpulses 1 ist, welche einer Beleuchtungs-Zeitdauer Tp entspricht, mit welcher das Objekt O angestrahlt werden soll.

Diese erste Niederschlags-Reflexions-Zeitdauer Tn bis zum Eintreffen des ersten zurückreflektierten Lichtimpulses 3 entsteht üblicherweise dadurch, dass ein niederschlagsfreier Raum 14 zwischen der Lichtquelle 4 und dem Bildsensor 5 einerseits und andererseits einem Raum 13 mit auftretendem Niederschlag N besteht. Beispielsweise beim Einsatz einer solchen Vorrichtung in einem Kraftfahrzeug würde dies einer Anordnung der Vorrichtung im Innenraum des Fahrzeugs hinter einer Scheibe 12 entsprechen.

Wie erkennbar ist, bewirkt insbesondere geringer Niederschlag N nur eine relativ geringe Bestrahlungsstärke E, welche beim Bildsensor 5 bzw. dessen Bildpunkt 6 erfasst wird.

Zu einem späteren Zeitpunkt, welcher einer Objekt-Lichtlaufzeit To von der Lichtquelle 4 zum Objekt O und zurück zu dem Bildpunkt 6 entspricht, trifft der Beginn eines empfangener Lichtimpulses, welcher dem vom Objekt O zurückreflektierten Lichtimpuls 2 entspricht, ein. Dessen Bestrahlungsstärke E ist meist deutlich größer als die Bestrahlungsstärke, welche durch den vom Niederschlag N zurückreflektierten Lichtimpuls 3 entspricht.

Der Photostrom I1, I2 bzw. die Bestrahlungsstärke E, welche von dem Bildpunkt 6 empfangen wird, wird an einen so genannten Shutter 7 (deutsch: Verschluss) angelegt, wie dies für sich bekannt ist. Insbesondere kann die Bestrahlungsstärke E bzw. die durch die Bestrahlungsstärke E verursachte Ladung auch an mehrere solche Shutter 7 angelegt werden, so dass anstelle Messungen mehrerer Lichtimpulse nacheinander auch nur ein einziger Lichtimpuls gemessen werden kann. In einem dritten und einem vierten Zeitdiagramm sind in Fig. 1 entsprechend an dem Shutter 7 dessen Integrationszeiten T1, T2 bzw. Integrationsdauer über die Zeit t skizziert. Dargestellt sind auch die über die Integrationszeiten T1, T2 akkumulierte Photoströme I1 bzw. I2 bzw. Spannungen als Integrationswerte U1, U2 des jeweiligen dem Shutter 7 nachgeschalteten Integrators 8.

Durchgeführt werden zwei Messungen, eine mit einem Kurzzeit-Shutter und eine mit einem Langzeit-Shutter. Dadurch werden in dem Kurzzeit-Shutter von dem Objekt O an den zumindest einen Bildpunkt 6 zurückreflektierte Lichtimpulse 2 innerhalb einer vorgegebenen ersten Integrationszeit T1 kleiner oder gleich der Beleuchtungs-Zeitdauer Tp erfasst. Dabei liegt ein Zeitpunkt T1s für den Beginn der Integrationszeit T1 vor dem Eintreffen des zurückreflektierten Lichtimpulses 2, der von einem nächstliegenden zu erfassenden Objektpunkt des Objekts O reflektiert wurde. Der Beginn des Kurzzeit-Shutter-Fensters bzw. der ersten Integrationszeit T1 liegt somit vor dem Ablauf der Objekt-Lichtlaufzeit To zum Objekt O und zurück. Dadurch bedingt wird während der Dauer der ersten Integrationszeit T1 nur ein Teil des Photostroms I1 des zurückreflektierten Lichtimpulses 2 erfasst.

Entsprechend wird in dem Langzeit-Shutter eine Messung vorgenommen, welche über eine zweite Integrationszeit T2 vorgenommen wird. Dabei liegt ein Zeitpunkt T2s des Beginns der zweiten Integrationszeit T2 beim gleichen Zeitpunkt T1s wie der Beginn der ersten Integrationszeit T1. Jedoch ist die Dauer der zweiten Integrationszeit T2 des Langzeit-Shutters deutlich länger als die Dauer der ersten Integrationszeit T1 des Kurzzeit-Shutters. Insbesondere erstreckt sich die Dauer der zweiten Integrationszeit T2 über ein Vielfaches der Beleuchtungs-Zeitdauer Tp. Bei beispielsweise einer Beleuchtungs-Zeitdauer Tp im Bereich von einigen zehn Nanosekunden erstreckt sich die zweite Integrationszeit T2 besonders bevorzugt über mehrere hundert Nanosekunden. Je nach verwendeten Komponenten sind jedoch auch andere zeitliche Werte einsetzbar.

Wie dies aus den Zeitdiagrammen erkennbar ist, bewirkt eine solche Zeitvorgabe, dass mittels des Kurzzeit-Shutters nur ein Teil der Energie E des zurückreflektierten Lichtimpulses 2 erfasst wird, während die von dem Langzeit-Shutter die gesamte Energie E des zurückreflektierten Lichtimpulses 2 erfasst wird.

Um eine Kompensation des Niederschlags N erzielen zu können, wird der Zeitpunkt T1s, T2s des Beginns der Integrationszeiten T1, T2 auf einen einstellbar zeitversetzten Zeitpunkt Td hinter den Zeitpunkt T0 des Aussendens des Lichtimpulses 1 gelegt.

Dazu kann insbesondere ein programmierbares Verzögerungsglied 11 eingesetzt werden, welches zwischen einer Kontroll- und/oder Recheneinheit 10 und der Lichtquelle 4 und/oder zwischen der Kontroll- und/oder Recheneinheit 10 und insbesondere dem Shutter 7 geschaltet ist. Optional kann ein solches programmierbares Verzögerungsglied 11 auch in Art einer Verzögerungsleitung ausgestaltet sein. Besonders bevorzugt ist in der Kontrolleinheit und/oder Recheneinheit 10 ein Trigger 15 vorgesehen, welcher entsprechende Triggersignale zum Triggern der Lichtquelle 4 und der weiteren Komponenten wie dem Bildsensor 5, dem Shutter 7 und einem dem Shutter 7 nachgeschalteten Integrator 8 ausgibt und gegebenenfalls, bereits eine Verzögerung implementiert.

Bevorzugt wird der versetzte Zeitpunkt Td so auf einen Zeitraum nach der Sendedauer des gesendeten Lichtimpulses 1 gelegt, dass die Verzögerung vorzugsweise der Beleuchtungs-Zeitdauer Tp entspricht. Dieser zeitliche Versatz ist bereits so groß, dass mit Blick auf die Abnahme des Einflusses von Niederschlag mit dem Quadrat der Entfernung eine ausreichende Reduzierung des Einflusses des Niederschlags N bewirkt wird. Prinzipiell kann aber auch eine kürzere Versatzdauer TD verwendet werden.

Besonders bevorzugt wird bei der Festlegung des versetzten Zeitpunkts Td eine Kenntnis der Einbausituation einer solchen Vorrichtung berücksichtigt. So kann beispielsweise die erste Niederschlags-Reflexions-Zeitdauer Tn bzw. Lichtlaufzeit, welche bis zum erstmöglichen Eintreffen eines vom Niederschlag N reflektierten Lichtimpulses 3 verstreicht, rechnerisch oder auch experimentell bestimmt werden. Mit dieser Kenntnis kann der versetzte Zeitpunkt Td bzw. eine entsprechende Verzögerungszeit vom Beginn des Aussendens des Lichtimpulses 1 bis zum Beginn der Integrationszeit T1, T2 festgelegt werden als Beleuchtungs-Zeitdauer Tp zuzüglich einer Korrektur-Zeitdauer Tofn. Die Korrektur-Zeitdauer Tofn entspricht dabei vorzugsweise der Niederschlags-Reflexions-Zeitdauer Tn bis zum frühest möglichen Eintreffen von vom Niederschlag N zurückreflektierten Lichtimpuls 3.

Dadurch entsteht hinter der Beleuchtungs-Zeitdauer Tp ein Ausblendzeitraum mit der Dauer der Korrektur-Zeitdauer Tofn. Entsprechend wird der Einfluss von Niederschlag N insbesondere im unmittelbaren Bereich vor der Lichtquelle 4 und dem Bildsensor 5 ausgeblendet. Erzielbar ist somit eine von Einflüssen des Niederschlags N zumindest teilweise befreite Bestimmung von Integrationswerten U1, U2, welche durch den zumindest einen Integrator 8 entsprechend zu den von dem Kurzzeit-Shutter bzw. dem Langzeit-Shutter angelegten Photoströmen I1 bzw. I2 bereitgestellt werden.

Eine Auswerteeinheit 9 und/oder die Recheneinheit 10 erhält die Integrationswerte U1, U2 und bestimmt aus diesen einen oder mehrere Abstände d oder Abstandswerte. Die Abstandswerte entsprechen dabei dem Abstand der Vorrichtung zu dem Objekt O, so dass ein entsprechender Abstand d berechnet und ausgegeben werden kann.

Anhand der nachfolgenden Gleichungen (3) und (4) ist erkennbar, dass ohne Niederschlag N ein Abstand d gleich einem Niederschlagsabstand dn bei vorliegendem Niederschlag N errechnet wird, wobei diese Werte zugleich auch dem Abstand d(1) des bekannten Verfahrens gemäß Formel (1) für den Fall ohne Niederschlag entsprechen.

Ohne Niederschlag wird ein Abstand d erhalten gemäß

$$d = \frac{1}{2} \cdot c \cdot Tp \cdot \left(1 - \frac{U1}{U2}\right) + \frac{1}{2} \cdot c \cdot TD = d(1). \qquad (3)$$

Bei Niederschlag wird hingegen ein Niederschlags-Abstand dn erhalten gemäß

$$dn = \frac{1}{2} \cdot c \cdot Tp \cdot \left(1 - \frac{U1}{U2}\right) + \frac{1}{2} \cdot c \cdot TD = d = d(1). \qquad (4)$$

Mittels einer solchen Anordnung von Komponenten bzw. Verfahrensschritten'kann ein 3D-Halbleitersensor vorteilhaft ausgestaltet werden. Ein solcher Halbleitersensor erfasst im Gesichtsfeld mit einem Öffnungswinkel ein dreidimensionales Objekt O entlang einer Bildzeile mit n Bildelementen. Zwischen dem Objekt O und dem Bildsensor 5 befinden sich Wassertropfen als Niederschlag N, welche durch Lichtstreuung und Lichtabschwächung zu einer Bildstörung führen können. Aufgrund des Öffnungswinkels der Optik nimmt die objektseitige Größe des Bildpunkts bzw. Pixels mit dem Abstand zum Bildsensor zu, während die mittlere Größe eines Wassertropfens im gesamten Gesichtfeld konstant bleibt. Der störende Einfluss von Niederschlag N nimmt damit quadratisch mit dem Abstand zum Bildsensor 5 ab. Entsprechend reicht oftmals die Anordnung der Lichtquelle 4 und des Bildsensors 5 von einer Scheibe vor dem Raum 13 mit möglichem Niederschlag N aus, um eine ausreichende Niederschlags-Reflexions-Zeitdauer Tn bzw. Lichtlaufzeit bis zu dem Raum 13 mit möglichem Niederschlag und zurück zu erzielen, um die Einflüsse des Niederschlags N ausreichend zu reduzieren. Durch die elektronische Verzögerung der Integrationsfenster bei der Signalerfassung um typisch ein Zeitintervall, welches der Breite eines Laserimpulses bzw. der Beleuchtungs-Zeitdauer Tp entspricht, wird bereits eine ausreichende Reduzierung des Einflusses des Niederschlags N erzielt, auch wenn kein ausreichender Abstand zu einem Raum mit Niederschlag N vorgesehen werden kann. Entsprechend diesem Zeitintervall werden Lichtanteile im Nahbereich des Bildsensors 5 nicht erfasst bzw. ausgeblendet und somit der störende Einfluss von Niederschlag N teilweise, idealerweise nahezu vollständig unterdrückt.

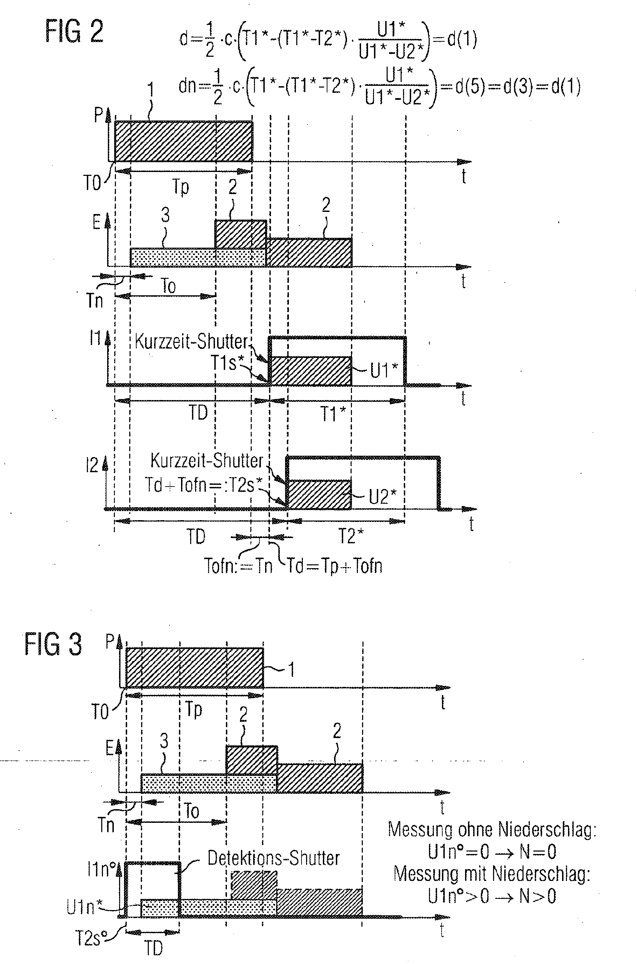

Fig. 2 zeigt eine alternative Verfahrensweise, bei welcher die Unterdrückung des Einflusses von Niederschlag N mit unterschiedlich verzögerten Kurzzeit-Shutter-Fenstern der jeweils selben zeitlichen Breite bzw. Dauer vorgenommen wird. Hinsichtlich des Grundprinzips werden wieder die Grundaspekte der ersten Ausführungsform herangezogen. Ein Vorteil der Ausführungsform gemäß Fig. 2 besteht jedoch darin, dass im Vergleich zur ersten Ausführungsform Objekte 0 bereits in kürzerem Abstand zum Bildsensor 5 ohne Fehlmessung bei Niederschlag N detektiert werden können.

Die Umsetzung erfolgt dadurch, dass für eine erste Integrationszeit T1* eines ersten Kurzzeit-Shutters der zeitversetzte Zeitpunkt Td wieder um vorzugsweise mindestens eine Dauer der Beleuchtungs-Zeitdauer Tp hinter den Zeitpunkt T0 des Beginns des Aussendens des Lichtimpulses 1 gelegt wird. Optional wird letztlich wieder eine Korrektur-Zeitdauer Tofn einer Niederschlags-Reflexions-Zeitdauer Tn bzw. Lichtlaufzeit von der Lichtquelle 4 des Lichtimpulses 1 zu dem Bereich 13 mit möglichem Niederschlag und zurück zum Bildpunkt 6 hinter den Beginn des Aussendens eines solchen Lichtimpulses 1 gesetzt.

Im Gegensatz zu der Verfahrensweise der ersten Ausführungsform wird jedoch eine zweite Integrationszeit T2* deutlich kürzer festgelegt, nämlich mit der gleichen Dauer wie der Dauer der ersten Integrationszeit T1*. Außerdem wird ein Zeitpunkt T2s* des Beginns der zweite Integrationszeit T2* zeitversetzt hinter einen Zeitpunkt T1s* des Beginns der ersten Integrationszeit T1* gelegt. Der Zeitversatz entspricht dabei vorzugsweise der Ausblendzeitdauer bzw. einer Korrektur-Zeitdauer Tofn, sofern eine solche zum Bestimmen des Beginns der ersten Integrationszeit T1* verwendet wurde. In jedem Fall beginnt die zweite Integrationszeit T2* innerhalb der ersten Integrationszeit T1*, vorzugsweise kurz nach Beginn der ersten Integrationszeit T1*. Dadurch wird bei dem skizzierten Beispiel ein Ausgangsspannungsanteil U2* von dem zweiten Kurzzeit-Shutter erfasst, welcher kürzer ist als der Ausgangsspannungsanteil U1* des ersten Kurzzeit-Shutters. Entsprechend ist der Wert des erfassten ersten Photostroms I1 und damit dessen Integrationswerte U1 größer als ein entsprechender Wert des zweiten Photostroms I2 und damit dessen Integrationswerte U2.

Die entsprechenden Integrationswerte U1, U2 werden wieder der Auswerteeinheit 9 zugeführt, welche entsprechend einen Abstand d berechnet. Wie aus den nachfolgenden Formeln (5) und (6) erkennbar ist, wird wiederum ohne Niederschlag N ein Abstand d erhalten, welcher einem Niederschlagsabstand dn bei Niederschlag N entspricht. Ein Vergleich mit den Formeln (1), (3) und (5) zeigt, dass die Abstandswerte denen der Beispiele für die Situation ohne Niederschlag N wieder entsprechen.

Ohne Niederschlag wird ein Abstand d erhalten gemäß

$$d = \frac{1}{2} \cdot c \cdot \left( T1* - (T1* - T2*) \cdot \frac{U1*}{U1* - U2*} \right) = d(1). \qquad (5)$$

Bei Niederschlag wird hingegen ein Niederschlags-Abstand dn erhalten gemäß

$$dn = \frac{1}{2} \cdot c \cdot \left( T1* - (T1* - T2*) \cdot \frac{U1*}{U1* - U2*} \right) = d(5) = d(3) = d(1). \qquad (6)$$

Fig. 3 zeigt ein bevorzugtes Verfahren zur Detektion bzw. Bestimmung von auftretendem Niederschlag durch Auswertung des integrierten Bildsignals direkt im Nahbereich des Bildsensors 5. Vorzugsweise wird dabei ein Nahbereich des Bildsensors 5 betrachtet, in welchem sich üblicherweise keine zu erfassenden Objekte befinden. Ein solcher Nahbereich liegt beispielsweise bei Montage der Vorrichtung an Gebäuden in großer Höhe mit darunter liegendem Messbereich oder bei Montage in einem Fahrzeug hinter der Windschutzscheibe mit einem Messbereich oberhalb der Motorhaube vor. Niederschlag lässt sich in diesen Fällen einfach aus dem integrierten Photostrom $I1n°$ bzw. aus dem Integrationswert $U1n°$ bestimmen. Liegt dieses Signal über dem Null-Niveau oder über einem Grundrauschen, so ist Niederschlag vorhanden. Anhand der Amplitude des mittels des Integrators integrierten Integrationswerts $U1n°$, das heißt anhand des Photostroms $I1n°$ lässt sich außerdem auf die Intensität des Niederschlags N schließen gemäß

$$I1n° > 0 \Rightarrow N > 0.$$

Fig. 3 zeigt beispielhafte Zeitdiagramme für einen ausgesendeten Lichtimpuls 1 und einen empfangenen, vom Niederschlag N zurückreflektierten Lichtimpuls 3. Schraffiert ist zusätzlich ein teilweise überlagerter von einem Objekt zurückreflektierter Lichtimpuls 2 skizziert. Das dritte Diagramm dient dabei zur Veranschaulichung der Verfahrensweise zur Detektion auftretenden Niederschlags N.

Für eine erste Verfahrensweise wird ein Detektions-Shutter mit einer so kurzen Integrationszeit $T1°$ angesetzt, dass vorzugsweise kein von einem Objekt zurückreflektierter Lichtimpuls 2 in das Shutter-Fenster fallen kann. Anhand der Amplitude des mittels des Integrators zum Integrationswert $U1n°$ integrierten Photostroms $I1n°$ lässt sich dann auf Niederschlag N schließen.

Eine weitere Verfahrensweise zum Feststellen von Niederschlag N ohne Annahme eines objektfreien Raumes im Nahbereich des Bildsensors 5 ist als zweite Variante ebenfalls umsetzbar. Aus einem Differenzwert gemessener Abstände $d_{1+N}$, $d_{2+N}$ von Objekten O mit und ohne Verzögerung des Shutter-Fensters kann auf Niederschlag N geschlossen werden. Bei dieser Verfahrensweise werden wieder zumindest zwei Shutter-Fenster mit jeweils einer zugeordneten ersten bzw. zweiten Integrationszeit T1, T2 gemäß den vorstehenden Ausführungsformen angesetzt, wie dies in Fig. 1 oder 2 skizziert ist. Jedoch wird davon abweichend für zwei weitere Shutter-Fenster ein Zeitpunkt $T2s°$ für den Beginn der weiteren Integrationszeiten T1, T2 angesetzt, welcher mit dem Zeitpunkt T0 des Beginns des Aussendens des Lichtimpulses 1 beginnen, wie dies in Fig. 4 skizziert ist. Dadurch werden zwei verschiedene Abstandswerte erhalten, ein Abstandswert mit Beeinflussung durch den Niederschlag N und ein Abstandswert ohne eine solche Beeinflussung.

Ohne Verzögerung des Shutter-Fensters bei Niederschlag N ergibt sich eine Fehlmessung mit einem falschen Abstand $d_{1+N}$, während sich mit einer Verzögerung des Shutter-Fensters der korrekte Abstand $d_{2+N}$ berechnet. Aus der Differenz lässt sich ein Maß Dn für den Niederschlag N ermitteln gemäß

$$D \equiv d_{1+N} - d_{2+N}.$$

Für das Maß Dn der Differenz größer Null ist Niederschlag N vorhanden. Bei Dn = 0 oder einem geringen Schwellwert darüber liegt kein Niederschlag N vor.

**Patentansprüche**

1. Verfahren zum Bestimmen eines Abstands (d) zu einem Objekt (O) mittels eines optoelektronischen Bildsensors (5) mit zumindest einem Bildpunkt (6) und einem dem Bildpunkt (6) zugeordneten einstellbaren Integrator (8), bei dem

   - das Objekt durch Aussenden mindestens eines Lichtimpulses (1) vorgegebener Beleuchtungs-Zeitdauer-(Tp) beleuchtet wird,
   - innerhalb zwei vorgegebenen Integrationszeiten (T1*, T2*) von dem Objekt (O) mindestens ein zurückreflektierter Lichtimpuls (2) an dem zumindest einen Bildpunkt (6) über eine Erfassungszeitdauer gleich der Beleuchtungs-zeitdauer (Tp) erfasst wird,
   - aus den resultierenden unterschiedlichen aufgenommenen Integrationswerten (U1*, U2*) des mindestens einen zurückreflektierten Lichtimpulses (2) der Abstand (d) ermittelt wird, **dadurch gekennzeichnet, dass**
   - die Zeitpunkte (T1s*, T2s*) für den Beginn der Integrationszeiten (T1*, T2*) auf einen zeitversetzten Zeitpunkt (Td) hinter den Beginn des Aussendens des Lichtimpulses (1) gelegt werden und nach dem Eintreffen des zurückreflektierten Lichtimpulses (2) liegen,
   - die Zeitpunkte (T1s*, T2s*) des Beginns der zwei Integrationszeiten (T1*, T2*) zu zeitlich zueinander versetzten zeitversetzten Zeitpunkten (T1s*, T2s*) beginnen, sowie auf die Dauer gleich festgelegt werden, wobei die zweite Integrationszeit (T2*) innerhalb der ersten Integrationszeit (T1*) beginnt, so dass der erste Integrationswert (U1*) größer als der zweite Integrationswert (U2*) ist.

2. Verfahren nach Anspruch 1, bei dem der zeitversetzte Zeitpunkt (Td) um mindestens eine Dauer der Beleuchtungs-Zeitdauer (Tp) hinter den Zeitpunkt (T0) des Beginns des Aussendens eines solchen Lichtimpulses (1) gelegt wird.

3. Verfahren nach Anspruch 2, bei dem der zeitversetzte Zeitpunkt (Td) zusätzlich mindestens um eine Korrektur-Zeitdauer (Tofn) entsprechend einer Niederschlags-Reflexions-Zeitdauer (Tn) von einer Lichtquelle (4) des Lichtimpulses (1) zu einem Raum (13) mit möglichem Niederschlag (N) und zurück zum Bildpunkt (6) hinter den Beginn des Aussendens eines solchen Lichtimpulses (1) gelegt wird.

4. Verfahren nach Anspruch 3, bei dem die Korrektur-Zeitdauer (Tofn) automatisiert bestimmt wird als eine Niederschlags-Reflexions-Zeitdauer (Tn) bis zum Eintreffen eines ersten zurückreflektierten Lichtimpulses (3) mit einer aufgenommenen Intensitäten in einem vorgegebenen Intensitätsbereich kleiner einem Niederschlags-Intensitätsschwellwert und/oder kleiner einer Intensität zu einem späteren Zeitpunkt hinter den Beginn des Aussendens eines solchen Lichtimpulses (1), insbesondere zu einem späteren Zeitpunkt größer der Dauer der Beleuchtungs-Zeitdauer (TP) hinter den Beginn des Aussendens eines solchen Lichtimpulses (1).

5. Verfahren nach einem der Ansprüche 1 bis 4, wobei die Beleuchtungs-Zeitdauer (Tp) des zumindest einen Lichtimpulses (1) im Bereich kleiner einer Millisekunde liegt, insbesondere im Nano- und Mikrosekundenbereich liegt.

**Claims**

1. Method for determining a distance (d) to an object (0) by means of an optoelectronic image sensor (5) with at least one image point (6) and an adjustable integrator (8) assigned to the image point (6), in which

   - the object is illuminated by emitting at least one light impulse (1) of a given illumination duration (Tp),
   - at least one light impulse (2) back-reflected from the object (0) is captured at the at least one image point (6) within two given integration times (T1*, T2*) about a detection duration equal the illumination duration (Tp),
   - the distance (d) is determined from the resulting different recorded integration values (U1*, U2*) of the at least one back-reflected light impulse (2), **characterized in that**
   - the points in time (T1s*, T2s*) for the beginning of the integration times (T1*, T2*) are placed on a time-shifted point in time (Td) after the beginning of the emission of the light impulse (1) and is after the arrival of the backreflected light impulse,
   - the points in time (T1s*, T2s*) of the beginning of the two integration times (T1*, T2*) begin at time-shifted points in time (T1s*, T2s*) temporarily shifted with respect to each other, as well as are assigned to the same duration, wherein the second integration time (T2*) begins within the first integration time (T1*), so that the first integration value (U1*) is higher than the second integration value (U2*).

2. Method according to claim 1, in which the time-shifted point in time (Td) is placed at least a duration of the illumination duration (Tp) after the point in time (T0) of the beginning of the emission of such a light impulse (1).

3. Method according to claim 2, in which the time-shifted point in time (Td) is placed additionally at least one correction duration (Tofn) according to a precipitation reflection duration (Tn) from a light source (4) of the light impulse (1) to a space (13) with possible precipitation (N) and back to the image point (6) after the beginning of the emission of such a light impulse (1).

4. Method according to claim 3, in which the correction duration (Tofn) is determined automatically as a precipitation reflection duration (Tn) to the arrival of a first back-reflected light impulse (3) with a recorded intensity in a given intensity range smaller than a precipitation intensity threshold value and/or smaller an intensity to a later point in time after the beginning of the emission of such a light impulse (1), in particular to a later point in time greater the duration of the illumination duration (TP) after the beginning of the emission of such light impulse (1).

5. Method according to any one of the claims 1 to 4, wherein the illumination duration (Tp) of the at least one light impulse (1) is in the range smaller than a millisecond, in particular in the nano- and microsecond range.


**Revendications**

1. Procédé de détermination d'une distance (d) par rapport à un objet (O) au moyen d'un capteur d'image optoélectronique (5) comprenant au moins un pixel (6), le pixel (6) étant associé à un intégrateur variable (8), dans lequel :

   - l'objet est éclairé par l'émission d'au moins une impulsion lumineuse (1) d'une durée de la période d'éclairage prédéterminée (Tp),
   - pendant la durée de deux temps d'intégration prédéterminés (T1*, T2*) de l'objet (O), au moins une impulsion de lumière réfléchie (2) est détectée au niveau d'au moins un pixel (6) pendant une période de détection égale à la durée de la période d'éclairage prédéterminée (Tp),
   - la distance (d) est déterminée à partir des résultats des différentes valeurs d'intégration enregistrées (U1*, U2*) d'au moins une impulsion lumineuse réfléchie (2), **caractérisé en ce que** :
   - les débuts (T1s*, T2s*) des temps d'intégration prédéterminés (T1*, T2*) ont un temps de retard (Td) par rapport au début de l'émission de l'impulsion lumineuse (1), et peuvent être réglés et sont déclenchés après l'arrivée de l'impulsion de lumière réfléchie (2),
   - les débuts (T1s*, T2s*) des deux temps d'intégration (T1*, T2*) ont des débuts (T1s* T2s*) décalés dans le temps l'un par rapport à l'autre et sont fixés à une durée égale, étant entendu que le deuxième temps d'intégration (T2*) commence au cours du premier temps d'intégration (T1*), de sorte que la première valeur d'intégration (U1*) est supérieure à la deuxième valeur d'intégration (U2*).

2. Procédé selon la revendication 1, **caractérisé en ce que** le temps de retard (Td) est égal au moins à la durée de la période d'éclairage prédéterminée (Tp) et commence après le moment (T0) du début de la transmission d'une telle impulsion lumineuse (1).

3. Procédé selon la revendication 2, **caractérisé en ce qu'**est ajouté au temps de retard (Td) au moins une durée de correction (Tofn) correspondant à une durée de réflexion de retombée (Tn) d'une source lumineuse (4) de l'impulsion lumineuse (1) vers un espace (13) ayant une retombée possible (N) et en retour vers le pixel (6) après le début de l'émission d'une telle impulsion lumineuse (1).

4. Procédé selon la revendication 3, **caractérisé en ce que** la durée de correction (tofn) est automatiquement déterminée comme une durée de réflexion de retombée (Tn) jusqu'à l'arrivée d'une première impulsion lumineuse réfléchie (3) ayant une intensité reçue dans une marge d'intensité prédéterminée inférieure à une valeur de seuil d'intensité de retombée et/ou inférieure à une intensité à un moment ultérieur après le début de l'émission d'une telle impulsion lumineuse (1), en particulier à un moment ultérieur supérieur au temps de la durée d'éclairage (TP) après le début de l'émission d'une telle impulsion lumineuse (1).

5. Procédé selon l'une des quelconques revendications 1 à 4, **caractérisé en ce que** la durée de la période d'éclairage prédéterminée (Tp) d'au moins une impulsion lumineuse (1) se situe dans une marge inférieure à une milliseconde, en particulier de l'ordre de la nanoseconde et de la microseconde.

# FIG 1

$$d = \frac{1}{2} \cdot c \cdot Tp \cdot \left(1 - \frac{U1}{U2}\right) + \frac{1}{2} \cdot c \cdot TD = d(1)$$

$$dn = \frac{1}{2} \cdot c \cdot Tp \cdot \left(1 - \frac{U1}{U2}\right) + \frac{1}{2} \cdot c \cdot TD = d = d(1)$$

FIG 2

$$d = \frac{1}{2} \cdot c \cdot \left( T1^* - (T1^* - T2^*) \cdot \frac{U1^*}{U1^* - U2^*} \right) = d(1)$$

$$dn = \frac{1}{2} \cdot c \cdot \left( T1^* - (T1^* - T2^*) \cdot \frac{U1^*}{U1^* - U2^*} \right) = d(5) = d(3) = d(1)$$

Kurzzeit-Shutter

T1s*

U1*

TD

T1*

Kurzzeit-Shutter

Td+Tofn=:T2s*

U2*

TD

T2*

Tofn:=Tn    Td=Tp+Tofn

FIG 3

Detektions-Shutter

Messung ohne Niederschlag:
U1n° = 0 → N = 0
Messung mit Niederschlag:
U1n° > 0 → N > 0

FIG 4   Stand der Technik

$$d = \frac{1}{2} \cdot c \cdot Tp \cdot \left(1 - \frac{U1x}{U2x}\right) \neq dn = \frac{1}{2} \cdot c \cdot Tp \cdot \left(1 - \frac{U1x + U1xn}{U2x + U2xn}\right)$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1040366 B1
- DE 19833207 A1
- DE 19757595 A1
- DE 10153742 A1
- US 4896606 A
- DE 10253437 A1